# EUROPEAN PATENT SPECIFICATION

(11) **EP 1 648 006 B1**
(45) Date of publication and mention of the grant of the patent: **30.07.2008**
(21) Application number: 04256373.4
(22) Date of filing: 15.10.2004
(51) Int. Cl.: H01G 9/20

(54) **A hybrid matrix composition, a photoelectric cell, an electrical device and a method of manufacturing a hybrid matrix composition**
Hybridmatrixzusammensetzung, photoelektrische Zelle, elektrische Vorrichtung und Verfahren zur Herstellung einer Hybridmatrixzusammensetzung
Composition à matrice hybride, cellule photoélectrique, composant électrique et méthode de fabrication d'une composition à matrice hybride

(43) Date of publication of application: 19.04.2006
(73) Proprietor: Riser Energy Limited, London N1 0QH (GB)
(72) Inventor: Cappelli, Fabio Renato, San Lazzaro di Savena Bologna (IT)
(74) Representative: Kenyon, Sarah Elizabeth

(56) References cited:
- EP-A- 0 892 411
- DE-A1- 4 237 693
- US-A- 4 080 488
- US-A1- 2003 140 959
- TURKOVIC A ET AL: "Dye-sensitized solar cell with CeO2 and mixed CeO2/SnO2 photoanodes" SOLAR ENERGY MATERIALS AND SOLAR CELLS, ELSEVIER SCIENCE PUBLISHERS, AMSTERDAM, NL, vol. 45, no. 3, 15 February 1997 (1997-02-15), pages 275-281, XP004058235 ISSN: 0927-0248

## Description

The present invention relates to a photoelectric cell using a hybrid matrix composition, an electrical device and a method of manufacturing a hybrid matrix composition.

Photoelectric cells are used in a wide range of power supply applications, most commonly using solar energy as the input power source. Typical examples of the use of solar cells include powering electronic devices such as calculators and, on a larger scale, providing a domestic power supply. Solar cells offer the prospect of a vast, environmentally friendly source of power. However, a number of problems exist in the prior art which inhibit wider use of solar power. These problems include the high production costs, low efficiency and limited durability of solar cells.

Solar cell technology is based on exploiting the photoelectric effect exhibited by certain materials and combinations of materials. A photon incident on a material structure which presents a photoelectric effect stimulates the excitement of an electron from the ground state to an excited electronic state with low or null binding energy. The binding energy of the excited electronic state is a barrier to the generation of a free electron; in photoelectric materials this can easily be overcome by the built-in potential of the solar cell. The ratio between the number of generated free electrons and the number of incident photons is the photoelectric conversion efficiency.

Conventional photoelectric cells exploit the photoelectric excitation of electrons in a semiconductor n-p junction device to produce electrical energy from photons incident on the cell, as is well known. Relatively high photoelectric conversion efficiencies are possible in such devices, particularly in those using mono-crystalline silicon as the semiconductor for example. However, these conventional cells require expensive semiconductor manufacturing techniques making them unsuitable for many large-scale applications, and their manufacture results in environmentally damaging by-products.

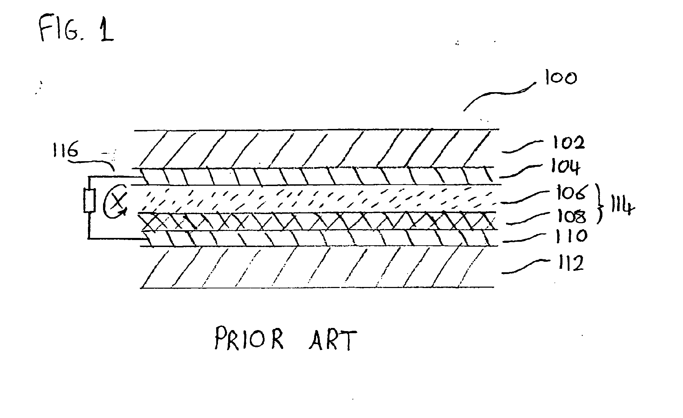

More recently, photoelectric cells have been developed using a thin film of semiconductor material. Such cells are disclosed in EP-A-1341197, to Fuji Photo Film Co. Ltd., and EP-A-1357566, to Catalysts & Chemicals Industries Co. Ltd., for example. These thin film cells typically have a layered structure as shown in Fig. 1, with an active photoelectric conversion layer 114 comprising a film of semiconductor material 108 coupled to a charge transport layer 106. The semiconductor 108 may be one of many known materials which exhibit a photoelectric effect, for example a metal oxide. The charge transport layer 106 serves to electronically regenerate the photosensitive layer 108 and may comprise an electrolyte having a reduction/oxidation system or a solid state carrier-transporting material.

The typical thin film photoelectric cell shown in Fig. 1 further comprises an electrode layer 110 and a counter electrode layer 104 either side of the photoelectric conversion layer 114, and a substrate 102, 112 associated with each electrode layer. One or both of the electrode layers 104, 110 and associated substrates 102, 112 are transparent and the electrodes 104, 110 are electrically connected through an external circuit 116. In operation, light incident on the cell passes through the transparent substrate and electrode to the photosensitive semiconductor layer 108, where electrons in the semiconductor are excited, reducing their binding energy. These electrons are transported to the adjacent electrode 110 under the influence of an electric field in the cell and from there to the opposite counter electrode 104 via the external circuit 116. Taking as an example a cell having an electrolyte as the charge transport layer 106, the electrons at the counter electrode 104 cause reduction in an oxidation/reduction system. Meanwhile, the oxidised semiconductor layer 108 is electronically regenerated by the electrolyte 106 at the boundary between the semiconductor layer 108 and the charge transport layer 106. In this way photoelectric power generation may occur continuously.

Photoelectric cells of the thin film type described above offer greatly reduced manufacturing costs compared with conventional silicon based cells. However, the photoelectric conversion efficiency of thin film cells is generally much less than that of conventional cells. Thin film cells are therefore unsuitable for many applications which have high power requirements.

The efficiency of a photoelectric cell may be improved by adsorbing a photosensitising dye having high light absorption in a desired wavelength band onto the photoelectric conversion layer. For example, organic dyes or organo-metallic complexes which absorb light in the visible region may be used as a photosensitiser. However, even where an appropriate photosensitiser is incorporated, prior art photoelectric cells suffer from lower photoelectric conversion efficiency and a shorter life-span than is desirable. If greater efficiency is desired, expensive manufacturing methods and materials must be used, resulting in an expensive cell and a long energy payback time.

DE 4237693 discloses a method of manufacturing a photoelectrochemical cell which has an electrode made of porous TiO₂. The TiO₂ electrode is precipitated out of a suspension by electrophoresis.

In view of the above, there is a need for a photoelectric cell providing improved efficiency combined with reduced cost of manufacture. The present invention provides a hybrid matrix composition and a method of manufacture which may be used to produce a photoelectric cell at least partially solving the above problems in the prior art.

In a first aspect of the invention, there is provided a photoelectric cell comprising a hybrid matrix composition, the composition comprising a matrix and being characterised by a plurality of separate metal oxide particles disposed within the matrix; wherein the composition is such that the particles are arrangeable within the matrix by application of one or both of an electric field and a magnetic field into a conduction configuration enabling charge transfer between adjacent members of at least one row of the particles within the matrix, each row comprising a plurality of particles.

The invention provides desirable operational characteristics, enables the use of low-cost production methods, and facilitates extension to large-scale industrial production. The particles may be arrangeable into any configuration in which some or all of the particles are disposed so as to enable the passage of charge carriers from one particle to an adjacent particle, thereby allowing the transport of charge within the hybrid matrix composition. The particle arrangement is thus not limited to any particular geometry. The charge carriers may be electrons, holes, or both. Mechanisms for electron transport between particles include electron hopping and a quantum tunnelling effect.

Preferably, the particles are in the conduction configuration.

Preferably, the matrix is capable of holding the particles in the conduction configuration without continued application of the electric and/or magnetic field.

Following the application of an electric and/or magnetic field to arrange the particles, the hybrid matrix composition forms a photoelectric layer.

Metal oxides have the capability to interact effectively with electromagnetic fields and such fields are therefore a suitable means of arranging the metal oxide particles.

Preferably, substantially all of the metal oxide particles are coated with an organic dye.

Suitably, substantially all of the metal oxide particles are further coated with a metal between the metal oxide and the organic dye.

Preferably, the metal oxide particles are asymmetric. More preferably, the metal oxide particles have a dimensional ratio of approximately 10:1.

Preferably, the metal oxide particles are arrangeable into at least one row, wherein the greatest dimension of each particle is substantially aligned with the local direction of the row.

Suitably, the metal oxide particles have dimensions between 5nm and 500nm.

Preferably, the metal oxide is one of Titanium dioxide, Zinc oxide and Cerium dioxide.

Suitably, there is provided a photoelectric cell comprising a plurality of stacked hybrid matrix layers, wherein each layer comprises a composition as defined in the claims.

Preferably, in the conduction configuration the metal oxide particles are arranged in a plurality of rows to form a grid. More preferably, the grid is a three-dimensional grid.

Preferably, the matrix comprises a soluble organic compound.

Suitably, the matrix comprises at least one of a phenolic-matrix heterogel, a molecular semiconductor and a conductive polymer.

In operation of the photoelectric cell of the present invention, photons incident on the metal oxide particles are converted into free electrons, enabling the generation of electric current. In manufacturing a photoelectric cell according to the invention, substances containing the metal oxide particles can be spread in a homogenous manner onto broad surfaces to form the hybrid matrix, allowing the fabrication of panels with a large active surface. The particles may be arranged subsequently to form the photoelectric layer. As a result, a photoelectric cell according to the present invention provides more flexibility in the size and shape of the cell than is possible using a conventional cell structure. Furthermore, a cell having a large active area may be produced at a relatively low cost compared with prior art devices.

The organisation of the particles is intended to ensure the continuous delivery of electric current by connecting the individual particles in which impinging photons produce charge carriers. Particle rows may be connected serially and in parallel.

Preferably, the photoelectric cell further comprises at least one collector electrode and at least one counter-electrode in electrical contact with the hybrid matrix composition; wherein a potential difference exists between the collector electrode and the counter-electrode.

Suitably, the or each collector electrode is electrically connected to a first end of an external circuit, and the or each counter-electrode is electrically connected to a second end of the external circuit.

Preferably, there are provided a plurality of collector electrodes and a plurality of counter-electrodes, wherein the collector electrodes are electrically connected to each other and the counter-electrodes are electrically connected to each other.

In a preferred embodiment, there is provided an electrical device including a photoelectric cell as defined in the claims.

In another embodiment, there is provided a modular current generator comprising a plurality of photoelectric cells as defined in the claims.

A more complex modular system allows a number of standard identical photoelectric panels to be used in combination to meet the power supply requirements of a wide range of applications. The use of standard panels may allow reduced manufacturing costs compared with a system using a panel designed specifically for a given task.

In a second aspect of the invention, there is provided a method for manufacturing a hybrid matrix composition for use in the mentioned of photoelectric cell, comprising providing a matrix; disposing a plurality of separate metal oxide particles within the matrix, characterised in that substantially all of the metal oxide particles are coated with an organic dye; and applying one or both of an electric field and a magnetic field for organising the metal oxide particles into a conduction configuration enabling charge transfer between adjacent members of at least one row of the particles within the matrix, each row comprising a plurality of particles.

In accordance with the invention, the metal oxide particles, which are initially scattered in the matrix, organise themselves in due time in the space within the matrix in response to applying one or both of an electric field and a magnetic field.

The manufacturing process of the invention is highly reproducible, uses materials available at low cost and is inexpensive to implement.

Embodiments of the invention will now be described by way of further example only and with reference to the accompanying drawings, in which:
Fig. 1 shows a cross-section of a prior art thin film photoelectric cell.
Fig. 2 shows a cross-section of a photoelectric cell according to an embodiment of the invention.

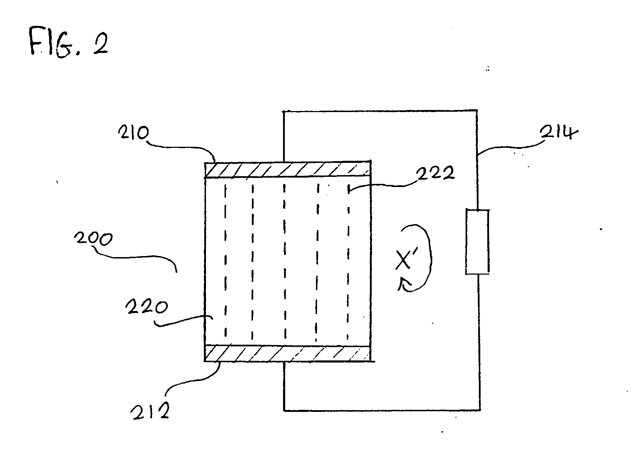

Fig. 2 shows a photoelectric cell 200 according to a preferred embodiment of the invention. The cell has a photoelectric layer consisting of a matrix 220, in which metal oxide particles 222 are disposed in ordered rows. Collector electrodes 210 are disposed at one end of the rows of particles and counter electrodes 212 are disposed at the other end of the rows of particles. The electrodes and the counter electrodes may be formed from different materials. The electrodes and counter electrodes are in electrical contact with the photoelectric layer and are electrically connected to each other via an external circuit 214. An electric potential difference exists between collector electrodes 210 and counter electrodes 212.

When the cell is exposed to light, a proportion of the light incident on the photoelectric layer is absorbed by either the matrix or an organic dye coating the metal oxide particles 222. The absorbed photons excite electrons in the matrix or the dye from the ground state to an excited state in which their binding energy is reduced. These excited electrons are injected into the metal oxide particles. The excited electrons are then transported along the particle rows under the influence of the electric potential in the cell to the collector electrodes 210. In addition, highly energetic photons, for example UV photons, may be absorbed directly by the metal oxide to produce an excited electronic state.

The particle row structure ensures that electrons generated in the metal oxide as a result of photoelectric excitation are transported between particles 222 along the rows towards the collector electrodes 210 located at the end of the rows, thus allowing the generation of electric current X'. Only one collector electrode 210 and one counter-electrode 212 are shown, but it will be appreciated that in a practical photoelectric cell multiple rows and multiple associated electrodes are used, wherein in some embodiments the particle rows form a two- or three-dimensional grid. Electron transport between particles 222 may occur either by electronic hopping or by a tunnel effect, depending on the specific arrangement of particles used.

The open circuit voltages between the collector electrodes 210 and the counter electrodes 212 are of the order of tenths of a Volt to tens of Volts, depending on the specific matrix composition and geometry of the cell.

The electrons generated by photoelectric stimulation are collected at collector electrode 210 and are transported to the counter electrode 212 via an external circuit 214. In this way the cell 200 may be used as a power supply for an electrical device forming part of the external circuit 214.

The oxidised dye and metal oxide particles 222 are electronically regenerated by the matrix 220, which is itself supplied with electrons from the external circuit 214 via the counter electrode 212, allowing the above process to generate current continuously. The electrical connection between the matrix-particle system and the electrodes is such that electrons travelling between particles can be collected by electrode 210 and regenerative electrons can be injected into the matrix by the counter electrode 212.

The invention uses, as active materials, metal oxides (which may also be coated with organic dyes) which have both advantageous photoelectric conversion properties and the capability to interact effectively with electromagnetic fields.

The invention is in part based on the realisation that these properties may be exploited to create structures made up of ordered arrangements of metal oxide particles in a matrix. In particular, as a result of these properties it is possible to arrange asymmetric and submicrometric metal oxide particles along a predetermined direction under the influence of an electromagnetic field.

In manufacturing a hybrid matrix according to the embodiment, a matrix is formed, within which the metal oxide particles are scattered. The particles are then aligned and oriented by an external stimulus so as to acquire the configuration needed for photoelectric conversion. The stimulus of the preferred embodiment is one or both of an electric field and a magnetic field, but it will be appreciated that any stimulus which results in particle alignment may be used. A magnetic field of between a few tenths of Tesla and 1 Tesla may be used to align the particles.

In the preferred embodiment the matrix is an organic or polymeric matrix. An organic compound is dissolved in a solvent together with the particles and spread on a surface. As the solvent evaporates a solid state matrix is generated. The particles are aligned by an external electric or magnetic field before complete evaporation of the solvent.

Materials are chosen as appropriate to obtain desirable operational characteristics, to enable the use of low-cost production methods, and to facilitate extension to large-scale industrial production. For example, titanium dioxide and a conductive polymer matrix are suitable materials for the metal oxide particles and the matrix of the embodiment respectively.

The substances that contain the metal oxide particles can be spread in a homogenous manner onto broad surfaces for the manufacture of panels with a broad active surface. The size of a panel according to this embodiment of the invention can be varied to suit the engineering requirements of a particular application.

A multi-layered wafer may be provided in which subsets of particles in each hybrid matrix layer are electrically connected to subsets of particles in the adjacent layers. In a preferred embodiment, each layer comprises a plurality of rows of particles and adjacent rows are connected to form a grid. Adjacent layers are also connected, resulting in a three-dimensional particle grid. The wafer may operate as a three-dimensional stand-alone cell for the production of electric current. The application of successive hybrid matrix layers allows the development of a three-dimensional architecture having the desirable property of maximising the photoelectric conversion efficiency given the same surface area.

Photoelectric panels according to the embodiment can also be connected serially or in parallel to construct a modular current generator.

As a further benefit, embodiments of the invention provide improved robustness and stability allowing photoelectric cells to operate outdoors with no programmed maintenance. Compatibility with atmospheric agents can be ensured either by a suitable choice of materials or, if necessary, by the use of protective layers and encapsulating structures.

The components of preferred embodiments are described in more detail in the following sections.

### Metal Oxide Particles

The main requirements that the metal oxide particles should fulfil are:
i) the ability to generate free charge carriers as a result of absorbing photons;
ii) the ability to generate free charge carriers via charge transfer processes when used in combination with organic dyes or an organic matrix;
iii) physiochemical compatibility with the compound used to make the support matrix;
iii) the ability to be organised under the influence of an electromagnetic field so as to ensure the flow of electric current between particles;
iv) the ability to maintain their electronic properties even after the spatial reorganisation induced by the electromagnetic field and even when operating in an outdoor environment.

A further consideration in the choice of particles and particle-dye systems is photoelectric conversion efficiency. Not all of the photons impinging on the particle-dye system give rise to a photoelectric effect. Some photons are scattered within the matrix, while others are absorbed by the dye or by the metal oxide and their energy dispersed by electronic de-excitation or photonic dispersion. Photoelectric conversion efficiency is an intrinsic property of the material that can be effectively modulated by the geometrical design of the particle-dye system. It is desirable to select the material and size of the particles to maximise the conversion efficiency.

Among the compounds that can be used to achieve the above-listed aims are cerium dioxide (CeO₂), zinc oxide (ZnO) and titanium dioxide (Ti0₂).

In order to maximise photoelectric conversion efficiency and minimise the accretion of thermal energy in the system, nanometer-sized particles having a high surface-to-volume ratio are used.

Elongated particles with nanometric dimensions between 5 nm and 500 nm and with a dimensional ratio of 10:1 are particularly suitable as the metal oxide particles, since such particles may be effectively aligned using electromagnetic fields that can easily be accessed with standard electromagnets. In this case, the magnetic field needed to achieve the alignment of the particles within the matrix is in the range between a few tenths of a Tesla and 1 Tesla.

The resulting arrangement of the particles within the matrix must allow the passage of charge carriers from one particle to an adjoining one. This may occur through a quantum tunnelling effect induced by the electric potential in the photoelectric cell.

In order to increase efficiency in the conversion from solar energy to electric current, the elongated nanometer particles can be coated with a thin layer of organic dye. A vast range of organic dyes with high absorption in the visible-ultraviolet spectrum can be used, inclusive of coumarines, rodamines, alizarines, ruthenium-based compounds etc.

In this configuration the photons absorbed by the organic dye generate electrons which are injected into the conduction band of the metal oxide. The electrons move in the direction of the electric field of the photoelectric cell until they reach the edge of the particle.

The electrons are then injected into the LUMO electronic level of the organic dye at the interface between two particles.

The passing of electrons from one particle to the next, and specifically from the organic layer of one particle to that of the adjoining particle, depends on the specific alignment of the particles and may occur either by electronic hopping or by a tunnel effect.

The organic dye is regenerated electronically through electrical contact with the matrix, which transports electrons into the HOMO level of the organic molecule and thus allows a continuous photoelectric effect.

Optionally, a layer of metal a few nm thick may be placed between the metal oxide and the organic dye. One example of a suitable metal for the metal layer is gold.

The role of the metal layer consists of ensuring better electronic regeneration of the organic dye by extending the area of contact with the matrix where the coating of the particles by the organic dye is non-uniform.

In this embodiment, if the electrons generated by photoelectric excitation in the organic dye move through the metal layer with a ballistic motion (i.e. maintaining their momentum) they can be injected into the conduction band of the oxide. The process of transporting the electrons between particles will remain qualitatively similar whether or not a metal layer is used.

### Matrix

The metal oxide particles are initially dispersed in organic substances which can be spread onto various kinds of supports that are compatible with optoelectronic functionality. In embodiments of the invention, the matrix may be a gel, a solid matrix, or a quasi-solid matrix. The main properties of a matrix suitable for use in a preferred embodiment of the invention are outlined below. The matrix is recommended to be formed from an organic or polymeric material.

The organic substances should have physiochemical and morphological characteristics that allow the particles to organise spatially under the influence of an external electromagnetic field.

The plasticity of the matrix preferably ensures both the mobility of the particles during application of the electromagnetic field and their positional stability once the effect of the field ceases.

The nature of the matrix preferably permits the placing of successive layers each endowed with the same characteristics and functionality.

The matrix is preferably a good electrical conductor. In particular, the matrix preferably guarantees the electronic regeneration of the organic dye by the injection of electrons into the HOMO level of the dye.

The matrix is preferably stable in the presence of the electromagnetic fields needed for the initial alignment of the particles and the operation of the apparatus.

The matrix preferably has an optical density in the solar-spectrum region compatible with the need to irradiate the metal oxide particles embedded in the matrix.

The chemical composition of the matrix, the matrix's morphology and its plasticity are selected to be compatible with the upkeep of the electronic properties of the metal oxide and with the size of the particles.

The matrix is preferably stable under persistent and high-intensity solar radiation. The thermal energy absorbed by the matrix-particle system should not hamper the mechanical stability of the matrix.

It has been found that the conductive polymers in particular meet the above requirements. However, it will be appreciated that any material fulfilling the above criteria to a sufficient extent to allow the composition to generate a photoelectric current may be used. Other possible materials for the matrix include phenolic-matrix heterogels and molecular semiconductors.

The above description of a preferred embodiment of the invention is provided by way of example only. The scope of the invention is defined by the accompanying claims.

## Claims

1. A photoelectric cell (200) comprising a hybrid matrix composition, the composition comprising a matrix (220) and a plurality of separate metal oxide particles (222) disposed within the matrix (220);
wherein the composition is such that the particles (222) are arrangeable within the matrix (220) by application of one or both of an electric field and a magnetic field into a conduction configuration enabling charge transfer between adjacent members of at least one row of the particles within the matrix, each row comprising a plurality of the particles.

2. A photoelectric cell (200) according to claim 1, wherein the particles (222) are in the conduction configuration.

3. A photoelectric cell (200) according to claim 1 or claim 2, wherein the matrix (220) is capable of holding the particles (222) in the conduction configuration without continued application of the electric and/or magnetic field.

4. A photoelectric cell (200) according to any of claims 1 to 3, wherein substantially all of the metal oxide particles (222) are coated with an organic dye.

5. A photoelectric cell (200) according to claim 4, wherein substantially all of the metal oxide particles are further coated with a metal between the metal oxide and the organic dye.

6. A photoelectric cell (200) according to any of claims 1 to 5, wherein the metal oxide particles (222) are asymmetric.

7. A photoelectric cell (200) according to claim 6, wherein the metal oxide particles (222) have a dimensional ratio of approximately 10:1.

8. A photoelectric cell (200) according to either of claims 6 and 7, wherein the greatest dimension of each particle is substantially aligned with the local direction of the row in the conduction configuration.

9. A photoelectric cell (200) according to any of claims 1 to 8, wherein the metal oxide particles (222) have dimensions between 5nm and 500nm.

10. A photoelectric cell (200) according to any of claims 1 to 9, wherein the metal oxide is one of Zinc oxide, Titanium dioxide and Cerium dioxide.

11. A photoelectric cell (200) according to any of claims 1 to 10 comprising a plurality of stacked matrix layers, wherein each layer comprises a composition as defined in claim 1.

12. A photoelectric cell (200) according to any of claims 1 to 11, wherein in the conduction configuration the metal oxide particles are arranged in a plurality of rows to form a grid.

13. A photoelectric cell (200) according to claim 12, wherein the grid is a three-dimensional grid.

14. A photoelectric cell (200) according to any of claims 1 to 13, wherein the matrix comprises at least one of a phenolic-matrix heterogel, a molecular semiconductor and a conductive polymer.

15. A photoelectric cell (200) according to any of claims 1 to 14, further comprising:
at least one collector electrode (210) and at least one counter-electrode (212) in electrical contact with the hybrid matrix composition;
wherein a potential difference exists between the collector electrode (210) and the counter-electrode (212).

16. A photoelectric cell (200) according to claim 15, wherein the or each collector electrode (210) is electrically connected to a first end of an external circuit (214), and wherein the or each counter-electrode (212) is electrically connected to a second end of the external circuit.

17. A photoelectric cell (200) according to claim 16, comprising a plurality of collector electrodes (210) and a plurality of counter-electrodes (212), wherein the collector electrodes (210) are electrically connected to each other and the counter-electrodes (212) are electrically connected to each other.

18. An electrical device including a photoelectric cell (200) according to any of claims 1 to 17.

19. A modular current generator comprising a plurality of photoelectric cells (200) according to any of claims 1 to 17.

20. A method for manufacturing a hybrid matrix composition for use in the photoelectric cell of claim 1, comprising:
providing a matrix (220);
disposing a plurality of separate metal oxide particles (222) within the matrix (220), wherein substantially all of the metal oxide particles are coated with an organic dye; and
applying one or both of an electric field and a magnetic field for organising the metal oxide particles (222) into a conduction configuration enabling charge transfer between adjacent members of at least one row of the particles within the matrix, each row comprising a plurality of particles. :

## Patentansprüche

1. Fotoelektrische Zelle (200), umfassend eine Hybridmatrixzusammensetzung, wobei die Zusammensetzung eine Matrix (220) und mehrere getrennte Metalloxidpartikel (222) umfasst, die innerhalb der Matrix (220) angeordnet sind;
wobei die Zusammensetzung derart ist, dass die Partikel (222) in der Matrix (220) durch Anlegen eines oder beider von einem elektrischen Feld und einem magnetischen Feld in einer Leitungskonfiguration angeordnet werden können, die eine Ladungsübertragung zwischen benachbarten Elementen mindestens einer Reihe der Partikel innerhalb der Matrix ermöglicht, wobei jede Reihe mehrere der Partikel umfasst.

2. Fotoelektrische Zelle (200) nach Anspruch 1, wobei die Partikel (222) in der Leitungskonfiguration sind.

3. Fotoelektrische Zelle (200) nach Anspruch 1 oder Anspruch 2, wobei die Matrix (220) imstande ist, die Partikel (222) in der Leitungskonfiguration zu halten, ohne das Anlegen des elektrischen und/oder magnetischen Feldes fortzusetzen.

4. Fotoelektrische Zelle (200) nach einem der Ansprüche 1 bis 3, wobei im Wesentlichen alle der Metalloxidpartikel (222) mit einem organischen Farbstoff überzogen sind.

5. Fotoelektrische Zelle (200) nach Anspruch 4, wobei im Wesentlichen alle der Metalloxidpartikel des Weiteren mit einem Metall zwischen dem Metalloxid und dem organischen Farbstoff überzogen sind.

6. Fotoelektrische Zelle (200) nach einem der Ansprüche 1 bis 5, wobei die Metalloxidpartikel (222) asymmetrisch sind.

7. Fotoelektrische Zelle (200) nach Anspruch 6, wobei die Metalloxidpartikel (222) ein Dimensionsverhältnis von etwa 10:1 aufweisen.

8. Fotoelektrische Zelle (200) nach einem der Ansprüche 6 und 7, wobei die größte Dimension jedes Partikels im Wesentlichen mit der örtlichen Richtung der Reihe in der Leitungskonfiguration ausgerichtet ist.

9. Fotoelektrische Zelle (200) nach einem der Ansprüche 1 bis 8, wobei die Metalloxidpartikel (222) Dimensionen zwischen 5 nm und 500 nm aufweisen.

10. Fotoelektrische Zelle (200) nach einem der Ansprüche 1 bis 9, wobei das Metalloxid eines von Zinkoxid, Titanoxid und Zeroxid ist.

11. Fotoelektrische Zelle (200) nach einem der Ansprüche 1 bis 10, umfassend mehrere gestapelte Matrixschichten,
wobei jede Schicht eine Zusammensetzung nach Anspruch 1 umfasst.

12. Fotoelektrische Zelle (200) nach einem der Ansprüche 1 bis 11, wobei in der Leitungskonfiguration die Metalloxidpartikel in mehreren Reihen zur Bildung eines Gitters angeordnet sind.

13. Fotoelektrische Zelle (200) nach Anspruch 12, wobei das Gitter ein dreidimensionales Gitter ist.

14. Fotoelektrische Zelle (200) nach einem der Ansprüche 1 bis 13, wobei die Matrix mindestens eines von einem Phenolmatrix-Heterogel, einem molekularen Halbleiter und einem leitenden Polymer umfasst.

15. Fotoelektrische Zelle (200) nach einem der Ansprüche 1 bis 14, des Weiteren umfassend:
mindestens eine Kollektorelektrode (210) und mindestens eine Gegenelektrode (212) in elektrischem Kontakt mit der Hybridmatrixzusammensetzung;
wobei zwischen der Kollektorelektrode (210) und der Gegenelektrode (212) eine Potenzialdifferenz vorhanden ist.

16. Fotoelektrische Zelle (200) nach Anspruch 15, wobei die oder jede Kollektorelektrode (210) elektrisch an ein erstes Ende einer externen Schaltung (214) angeschlossen ist, und wobei die oder jede Gegenelektrode (212) elektrisch an ein zweites Ende der externen. Schaltung angeschlossen ist.

17. Fotoelektrische Zelle (200) nach Anspruch 16, umfassend mehrere Kollektorelektroden (210) und mehrere Gegenelektroden (212), wobei die Kollektorelektroden (210) elektrisch aneinander angeschlossen sind und die Gegenelektroden (212) elektrisch aneinander angeschlossen sind.

18. Elektrische Vorrichtung, die eine fotoelektrische Zelle (200) nach einem der Ansprüche 1 bis 17 enthält.

19. Modularer Stromgenerator, umfassend mehrere fotoelektrische Zellen (200) nach einem der Ansprüche 1 bis 17.

20. Verfahren zur Herstellung einer Hybridmatrixzusammensetzung zur Verwendung in der fotoelektrischen Zelle nach Anspruch 1, umfassend:
das Bereitstellen einer Matrix (220);
das Anordnen mehrere getrennter Metalloxidpartikel (222) innerhalb der Matrix (220),
wobei im Wesentlichen alle der Metalloxidpartikel mit einem organischen Farbstoff überzogen sind; und
das Anlegen eines oder beider von einem elektrischen Feld und einem magnetischen Feld, um die Metalloxidpartikel (222) in einer Leitungskonfiguration zu organisieren, die eine Ladungsübertragung zwischen benachbarten Elementen mindestens einer Reihe der Partikel innerhalb der Matrix ermöglicht, wobei jede Reihe mehrere der Partikel umfasst.

## Revendications

1. Cellule photoélectrique (200) comprenant une composition à matrice hybride, la composition comprenant une matrice (220) et une pluralité de particules d'oxyde métallique séparées (222) disposées à l'intérieur de la matrice (220) ;
la composition étant telle, que les particules (222) peuvent être disposées à l'intérieur de la matrice (220) grâce à l'application de l'un ou l'autre ou des deux parmi un champ électrique et un champ magnétique selon une configuration de conduction permettant un transfert de charge entre des éléments adjacents d'au moins une rangée de particules à l'intérieur de la matrice, chaque rangée comprenant une pluralité de particules.

2. Cellule photoélectrique (200) selon la revendication 1, les particules (222) se trouvant dans une configuration de conduction.

3. Cellule photoélectrique (200) selon la revendication 1 ou la revendication 2, la matrice (220) étant capable de maintenir les particules (222) dans la configuration de conduction sans l'application continue du champ électrique et/ou magnétique.

4. Cellule photoélectrique (200) selon l'une quelconque des revendications 1 à 3, essentiellement toutes les particules d'oxyde métallique (222) étant revêtues d'un colorant organique.

5. Cellule photoélectrique (200) selon la revendication 4, essentiellement toutes les particules d'oxyde métallique étant par ailleurs revêtues d'un métal entre l'oxyde métallique et le colorant organique.

6. Cellule photoélectrique (200) selon l'une quelconque des revendications 1 à 5, les particules d'oxyde métallique (222) étant asymétriques.

7. Cellule photoélectrique (200) selon la revendication 6, les particules d'oxyde métallique (222) possédant un rapport dimensionnel d'approximativement 10:1.

8. Cellule photoélectrique (200) selon l'une quelconque des revendications 6 et 7, la plus grande dimension de chaque particule étant essentiellement alignée avec la direction locale de la rangée dans la configuration de conduction.

9. Cellule photoélectrique (200) selon l'une quelconque des revendications 1 à 8, les particules d'oxyde métallique (222) ayant des dimensions comprises entre 5 nm et 500 nm.

10. Cellule photoélectrique (200) selon l'une quelconque des revendications 1 à 9, l'oxyde métallique étant l'un parmi un oxyde de zinc, un dioxyde de titane et un dioxyde de cérium.

11. Cellule photoélectrique (200) selon l'une quelconque des revendications 1 à 10 comprenant une pluralité de couches de matrice empilées, chaque couche comprenant une composition telle que définie dans la revendication 1.

12. Cellule photoélectrique (200) selon l'une quelconque des revendications 1 à 11, avec laquelle dans la configuration de conduction, les particules d'oxyde métallique sont disposées en une pluralité de rangées afin de former un réseau.

13. Cellule photoélectrique (200) selon la revendication 12, le réseau étant un réseau tridimensionnel.

14. Cellule photoélectrique (200) selon l'une quelconque des revendications 1 à 13, la matrice comprenant au moins l'un parmi un hétérogel à matrice phénolique, un semi-conducteur moléculaire et un polymère conducteur.

15. Cellule photoélectrique (200) selon l'une quelconque des revendications 1 à 14, comprenant par ailleurs :
au moins une électrode collectrice (210) et au moins une contre-électrode (212) en contact électrique avec la composition à matrice hybride ;
une différence de potentiel existant entre l'électrode collectrice (210) et la contre-électrode (212).

16. Cellule photoélectrique (200) selon la revendication 15, cette ou chacune de ces électrodes collectrices (210) étant connectée(s) électriquement à une première extrémité d'un circuit externe (214), et cette ou chacune de ces contre-électrodes (212) étant connectée(s) électriquement à une deuxième extrémité du circuit externe.

17. Cellule photoélectrique (200) selon la revendication 16, comprenant une pluralité d'électrodes collectrices (210) et une pluralité de contre-électrodes (212), les électrodes collectrices (210) étant connectées électriquement les unes aux autres et les contre-électrodes (212) étant connectées électriquement les unes aux autres.

18. Dispositif électrique incluant une cellule photoélectrique (200) selon l'une quelconque des revendications 1 à 17.

19. Générateur de courant modulaire comprenant une pluralité de cellules photoélectriques (200) selon l'une quelconque des revendications 1 à 17.

20. Procédé de fabrication d'une composition à matrice hybride pour l'utilisation dans la cellule photoélectrique selon la revendication 1, comprenant :
la fourniture d'une matrice (220) ;
la disposition d'une pluralité de particules d'oxyde métallique (222) à l'intérieur de la matrice (220),
essentiellement toutes les particules d'oxyde métallique étant revêtues d'un colorant organique; et
l'application de l'un ou l'autre ou des deux parmi un champ électrique et un champ magnétique pour organiser les particules d'oxyde métallique (222) selon une configuration de conduction permettant le transfert de charge entre des éléments adjacents d'au moins une rangée de particules à l'intérieur de la matrice, chaque rangée comprenant une pluralité de particules.
